# EUROPÄISCHE PATENTANMELDUNG

(11) **EP 3 382 232 A1**
(43) Veröffentlichungstag der Anmeldung: **03.10.2018**
(21) Anmeldenummer: 18160460.4
(22) Anmeldetag: 07.03.2018
(51) Int. Cl.: F16G 11/04, F16G 11/10, E04C 5/12

(54) **VORRICHTUNG ZUR ANBINDUNG VON ELASTISCHEN ZUGELEMENTEN FÜR STATISCHE UND DYNAMISCHE ANWENDUNGEN**

(30) Priorität: 14.03.2017 DE 202017101474 U
(71) Anmelder: KKV Marken- und Patentschutz GbR, 42699 Solingen (DE)
(72) Erfinder: CALIS, Deniz, 42653 Solingen (DE); VEHRING, Holger, 46414 Rhede (DE)
(74) Vertreter: Buse, Mentzel, Ludewig Patentanwaltskanzlei

(57) **Zusammenfassung**

Die Erfindung beschreibt eine Vorrichtung (10) zur Anbindung von elastischen Zugelementen für statische und dynamische Anwendungen, mit einem eine Mittelachse (12) aufweisenden Gehäuse (11). Das Gehäuse (11) weist eine Aufnahme (15) auf, in welches ein Ende des Zugelements aufnehmbar ist, wobei dann das Zugelement aus dem hinteren Bereich (13) des Gehäuses (11) heraus ragt. Es sind ein oder mehrere Sperrelemente (20) vorgesehen woebi das Ende des Zugelements unter Zwischenschaltung der Sperrelemente (20) in der Aufnahme (15) verklemmbar ist. Für jedes der Sperrelemente (20) ist eine Bahn (16) vorgesehen, in der das jeweilige Sperrelement (20) verschieblich angeordnet ist. Die Erfindung schlägt nun vor, dass jede der Bahnen (16) schräg zur Mittelachse (12) des Gehäuses (11) verläuft, wobei sich der Verlauf der Bahnen (16) in Richtung des hinteren Bereiches (13) des Gehäuses (11) verjüngt. Bei einer Zugbelastung des im Gehäuse (11) befindlichen Zugelementes sind die Sperrelemente (20) auf den Bahnen (16) in Richtung des hinteren Bereiches (13) des Gehäuses (11) bewegbar und verklemmen dort das Zugelement weiter. Die Sperrelemente (20) sind keilförmig ausgebildet, wobei der Winkel der Steigung (Steigungswinkel 22) der Keilform dem Winkel der Verjüngung (Verjüngungswinkel 17) der Bahnen (16) entspricht (Fig. 1).

## Beschreibung

Die Erfindung betrifft eine Vorrichtung der im Oberbegriff von Anspruch 1 genannten Art. Solche Vorrichtungen werden häufig benötigt, nämlich beispielsweise um elastische Zugelemente an anderen Bauteilen oder Elementen zu befestigen, z.B. für Zugentlastungen oder für Notfallbetätigungen.

Elastische Zugelemente kommen insbesondere bei dynamischen Anwendungen vielfach zum Einsatz, z.B. in der Kranindustrie, für die Lastanwendung an Tür- und Toranlagen, für einen Gewichtsausgleich als Dämpfungsseil für Leitungsschlaufen bei Laufkatzen, zum automatischen Öffnen von elastischen Schiebetüren auch bei Stromausfall usw. Hierzu müssen die elastischen Zugelemente an anderen Bauteilen befestigt werden bzw. mit diesen in Eingriff gebracht werden. Im Gegensatz zu weniger elastischen Zugelementen besteht bei elastischen Zugelementen das Problem, dass sie sich bei einer Zugbelastung verjüngen, also dünner werden und dann ggf. nicht mehr sicher befestigt sind.

Eine Möglichkeit zur Befestigung von Seilen, Kabeln, Drähten, Riemen o.dgl. beschreibt die DE 87 08 661 U1. Hier ist eine in Achsrichtung verlaufende Längsbohrung vorgesehen, in welcher ein federbelasteter Klemmkörper axial verschiebbar geführt ist, wobei eine weitere Schrägbohrung im Gehäuse vorgesehen ist, welche in die Längsbohrung einmündet und mittels des Klemmkörpers das Seil in der Längsbohrung verklemmt. Nachteilig hierbei ist es jedoch, dass je nach Belastungsrichtung des Seiles dieses aus der Klemmung herausrutschen kann, insbesondere bei der Verwendung von elastischen Seilen. Darüber hinaus ist der Aufbau kompliziert und teuer.

Die DE 203 08 772 U1 beschreibt eine Halterung für Seile zur Befestigung von verschiedenen Elementen, welche eine profilierte Schiene mit einer Längsachse aufweisen. Die Seilklemmeinrichtung ist dabei als Nutstein ausgebildet. Hierbei besitzt die Seilklemmeinrichtung ein Gehäuse mit einem konischen verlaufenden Innenkanal, in welchen ein mit einer Axialbohrung versehenes Steuerteil verschiebbar gelagert ist, wobei ein Klemmstück in einer radialen Aussparung in der Wand des Steuerteils sich am konischen Bereich des Innenkanals des Gehäuses und an dem Seil abstützt. Auch dieses Bauteil ist nicht für elastische Seile oder Zugelemente geeignet und kompliziert im Aufbau.

Im Dokument DD 214 419 wird eine Seilendbefestigung beschrieben, bei der zunächst eine Weichmetallhülse, eine Metallscheibe und eine Weichmetallscheibe auf das Seil geschoben werden und dann das Seilende in der Hülse verpresst wird. Dann werden konische Ringsegmente um die Weichmetallhülse gelegt und eine konische Seilhülse darüber geschben. Bei einer Kraftbelastung des Seiles verteilt sich diese durch die Pressverbindung auf die Ringsegmente, die sich im Schaft der konischen Seilhülse verkeilen. Wird diese Vorrichtung für ein elastisches Seil oder Zugelement verwendet, welches sich bei einer Zugbelastung deutlich verjüngt, so würde es bei dieser Ausgestaltung aus der Weichmetallhülse heraus gezogen. Eine sichere Befestigung des Endes eines elastischen Zugelementes, wie eines Gummikabels, wäre hier nicht mehr gegeben. Darüber hinaus ist die Vorrichtung aufwendig und somit teuer in der Herstellung und Montage.

Die US 4,509,233 beschreibt eine Klemmung für ein nichtmetallisches Seil. Das Seil wird hier in einen aus mehreren konischen Segmenten bestehenden Anschlusspfropfen eingebracht, welcher mit einer geriffelten Bohrung versehen ist. Der Anschlusspfropfen weist ein Außengewinde auf, welches mit einem Innengewinde einer Hülle in Wirkverbindung bringbar ist. Durch die Verschraubung des Anschlusspfropfens in der Hülle werden die konischen Segmente zusammengedrückt und klemmen so das Seil in der geriffelten Bohrung zusammen. Hier handelt es sich um eine statische Verklemmung eines Seiles, welches sich bei Zugbelastungen nicht merklich verjüngt. Würde ein elastisches Zugelement in die geriffelte Bohrung eingebracht und mit einer Zugbelastung versehen, würde sich dieses verjüngen und aus der Bohrung herausrutschen.

In der US 6,155,617 schließlich ist eine Vorrichtung beschrieben, die dazu dient, Seile, die als Plomben zur Versiegelung dienen, zu sichern. Das Seilende wird in einem Gehäuse in eine konische Bohrung eingebracht. In dieser Bohrung sind auch noch federbelastete kugel- oder radförmige Sperrelemente vorgesehen, die durch die Kraft der Feder in Richtung der Verjüngung der Bohrung gedrückt werden und so das Seil einklemmen. Auch diese Vorrichtung ist weder für dynmaische Anwendungen noch für elastische Seile vorgesehen. Der Kontakt zwischen den Sperrelementen und dem Seil erfolgt hier nur punktuell. Bei einer Verjüngung des Seiles bei Zugbelastung, wären die Sperrelemente nicht mehr in der Lage, das Seil sicher zu verklemmen und es besteht die Gefahr, dass es aus der Öffnung herausrutschen kann.

Aufgabe der Erfindung ist es daher, eine Anbindungsmöglichkeit für elastische Zugelemente bereitzustellen, welche auch bei einer Verjüngung des Zugelementes durch Zugbelastung das Zugelement sicher halten, auch bei stärkeren Belastungen. Diese Aufgabe wird durch die kennzeichnenden Merkmale von Anspruch 1 gelöst, denen folgende besondere Bedeutung zukommt.

Die Vorrichtung weist ein oder mehrere Sperrelemente auf, wobei jedes Sperrelement in einer eigenen Bahn verschieblich angeordnet ist. Die Bahnen verlaufen dabei schräg zur Mittelachse des Gehäuses und verjüngen sich in Richtung des hinteren Bereiches des Gehäuses. Ist jetzt ein Zugelement im Gehäuse angeordnet und wird dies mit einer Zugkraft belastet, so bewegen sich die Sperrelemente auf ihren Bahnen in Richtung der Verjüngung und verklemmen dort das Zugelement. So wird das elastische Zugelement sicher in der Vorrichtung im Gehäuse gehaltert und kann, auch wenn es sich bei Zugbelastungen verjüngt, nicht aus dem Gehäuse herausgezogen werden. Vielmehr verklemmen die Sperrelemente das elastische Zugelement, je mehr das Zugelement mit einer Zugkraft belastet wird. Hierdurch wird die Halterung des Zugelements besonders sicher gestaltet und kann auch für sicherheitsrelevante Anwendungen eingesetzt werden. Dabei ist es vorteilhaft bei der werkzeuglosen Montage des Zugelementes die Sperrelemente im Gehäuse zu positionieren und das Zugelement einmal mit einer Zugbelastung zu versehen, um die Sperrelemente in die richtige Position zu bringen und das Zugelement sicher zu verklemmen.

Hierbei sind die Sperrelemente in etwa keilförmig ausgebildet, wobei der Winkel der Steigung dieser Keilform dem Winkel der Verjüngung der Bahnen entspricht. Dies ermöglicht es den Sperrelementen quasi gerade an der Oberfläche des Zugelementes auf den Bahnen herunterzurutschen, wobei immer eine komplette Seite des keilförmigen Sperrelementes am Zugelement anliegt. Die volle Fläche des Keils wird somit als Klemmfläche auf dem elastischen Element genutzt und zwar unabhängig von der Verjüngung des elastischen Elements bei einer Zugbelastung. Der Keil "wandert" bei der Verjüngung des elastischen Elementes mit diesem mit nach Innen und liegt immer vollflächig an. So wird verhindert, dass nur eine punktuelle Verklemmung des Zugelementes erfolgt und die Verklemmung des Zugelementes wird auch bei Belastungen sicher gestaltet.

Weiterhin bevorzugt ist die dem Zugelement zugewandte Seite des Sperrelementes mit einer Struktur versehen, beispielsweise mit einer Riffelung, einer Verzahnung, einem Profil, einem Zackenmuster oder Ähnlichem. Somit graben sich die Sperrelemente noch besser in das Zugelement ein und die Verklemmung ist noch stärker gegeben.

Der Durchmesser der Aufnahme im hinteren Bereich des Gehäuses kann dem Durchmesser des Zugelementes im entspannten Zustand entsprechen. Somit wird das Zugelement auch im entspannten Zustand gut in dem Gehäuse aufgenommen.

Auch der Durchmesser der Aufnahme im vorderen Bereich des Gehäuses im Bereich zwischen den Bahnen der Sperrelemente kann dem Durchmesser des Zugelementes im entspannten Zustand entsprechen. Auch hier kann das Zugelement dann problemlos in das Gehäuse eingebracht und dort festgelegt werden.

Bevorzugterweise weist das Gehäuse in seinem vorderen Bereich ein Außengewinde auf. An dieses Außengewinde ist dann eine Vielzahl von weiteren Bauteilen und Anschlusseinrichtungen durch einfache Maßnahmen befestigbar und zwar indem diese Bauteile ein zum Außengewinde am Gehäuse passendes Innengewinde aufweisen und hiermit am Gehäuse verschraubt werden. Die Bauteile können dann auch einfach bei Bedarf ausgetauscht werden. So können beispielsweise Haken, Ösen, Flansche oder andere Bauteile vorgesehen werden. So ist es einfach, das Zugelement an weiteren Bauteilen, Maschinenelementen oder anderen Vorrichtungen zu befestigen.

Weitere Vorteile und Ausführungsbeispiele ergeben sich aus den Unteransprüchen, der nachfolgenden Beschreibung sowie den Zeichnungen. In den Zeichnungen ist die Erfindung in einem Ausführungsbeispiel dargestellt:
- Fig. 1:: eine erfindungsgemäße Vorrichtung mit zusätzlich angeschlossenem Flansch im Schnitt,
- Fig. 2:: der vordere Bereich des Gehäuses der Vorrichtung im Schnitt,
- Fig. 3:: einen Schnitt durch die Vorrichtung aus Fig. 1 entlang der Linie III - III,
- Fig. 4:: die erfindungsgemäße Vorrichtung mit montiertem Flansch.

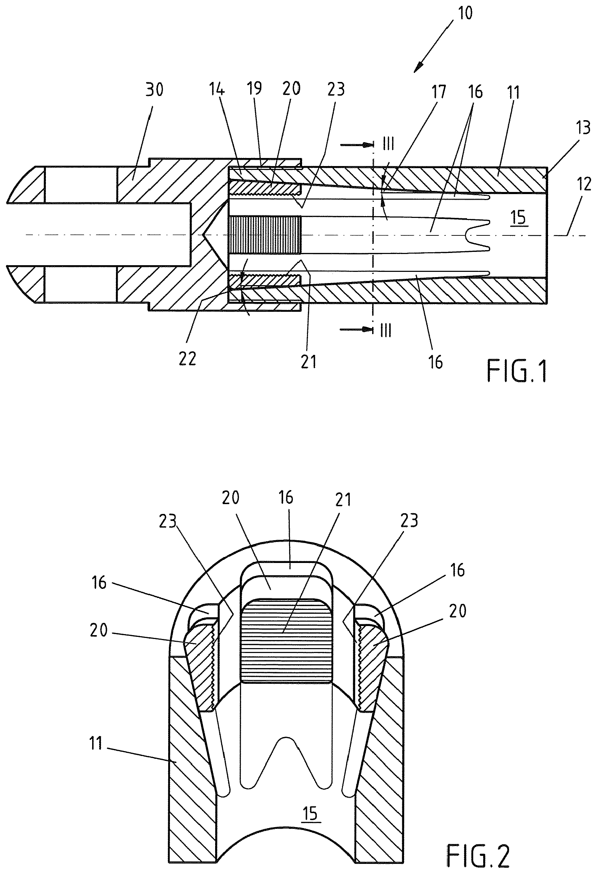

Fig. 1 zeigt die erfindungsgemäße Vorrichtung 10 im Längsschnitt. Man erkennt das Gehäuse 11 mit der Aufnahme 15 und der Mittelachse 12. Des Weiteren sind drei Sperrelemente 22 erkennbar, welche in dafür vorgesehenen Bahnen 16 angeordnet sind. Die Sperrelemente 20 sind derzeit noch im vorderen Bereich 14 des Gehäuses 11 angeordnet. Wird jedoch in die Aufnahme 15 ein hier nicht dargestelltes Zugelement eingebracht, welches in Richtung des hinteren Bereiches 13 des Gehäuses 11 mit einer Zugkraft belastet wird, so verschieben sich die Sperrelemente 20 auf ihren Bahnen 16 in Richtung des hinteren Bereiches 13 und verklemmen so das Zugelement. Dadurch, dass die Bahnen 16 sich verjüngen, treten die Sperrelemente 20 quasi aus der lichten Weite der Aufnahme 15 heraus und üben ihre Klemmwirkung auf das Sperrelement aus.

Die Sperrelemente 20 sind dabei keilartig ausgestaltet und weisen einen Steigungswinkel 22 auf. Dieser entspricht dem Verjüngungswinkel 17 der jeweiligen Bahn 16. Hierdurch ist gewährleistet, dass bei einem Verschieben der Sperrelemente 20 in Richtung des hinteren Bereiches 13 des Gehäuses 11 die dem Zugelement zugewandte Seite 21 immer parallel zum Zugelement bleibt und somit jederzeit eine flächige Verklemmung des Zugelementes in der Vorrichtung 10 bewirkt.

Des Weiteren ist die dem Zugelement zugesandte Seite Seite 21 des Sperrelementes 20 noch mit einer Struktur 23 versehen, die die Verklemmung des Zugelementes noch fördert. Hier erkennt man ein Zackenmuster bzw. eine Riffelung.

Außerdem erkennt man, dass das Gehäuse 11 in seinem vorderen Bereich 14 über ein Außengewinde 19 verfügt, an welchen hier ein Flansch 30 angeschlossen ist. Mit Hilfe dieses Flansches 30 kann das im Gehäuse 11 befindliche Zugelement an ein weiteres Bauteil oder Ähnliches angeschlossen werden.

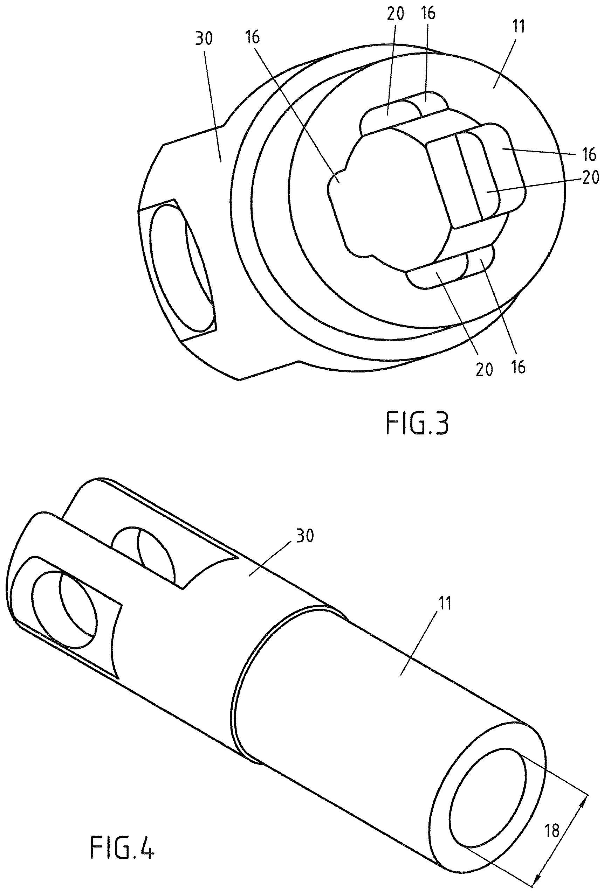

Den Aufbau des Gehäuses 11 mit den Bahnen 16 und den Sperrelementen 20 verdeutlichen auch die Fig. 2 und 3. Auch hier befinden sich die Sperrelemente 20 noch in ihrem Ausgangszustand bevor ein Zugelement in die Aufnahme 15 eingebracht und mit einer Zugbelastung versehen wird.

Fig. 4 wiederum zeigt die vollständige Vorrichtung 10 mit Gehäuse 11 und einem daran angeschlossenen Flansch 30. Auch dieser Flansch 30 ist wieder über ein Außengewinde 19 am Gehäuse 11 sowie ein Innengewinde am Flansch 30 verschraubt. Im montierten Zustand ragt aus der Öffnung am hinteren Bereich 13 des Gehäuses 11 mit dem Durchmesser 18 das Zugelement heraus.

Die erfindungsgemäße Vorrichtung ist vielseitig einsetzbar. An das Gehäuse sind auch andere Bauteile anschließbar. Der hier dargestellte Flansch ist lediglich ein Ausführungsbeispiel. Auch kann der Anschluss an das Gehäuse über andere Mittel als über ein Gewinde erfolgen. So sind beispielsweise auch nicht lösbare Verbindungen, wie Kleb- oder Schweißverbindungen aber auch Clips- und Klemmverbindungen und Ähnliches möglich. Die Anzahl und Größe der Sperrelemente sowie der Winkel der Verjüngung und der Keilform können variieren und werden dem jeweiligen Anwendungsfall angepasst. Die Vorrichtung kann aus den unterschiedlichsten Materialien bestehen. Beispielsweise kann die Vorrichtung aus Edelstahl oder aus Aluminium als Drehteil hergestellt werden. Es ist auch möglich die Vorrichtung als Druckgussteil vorzusehen oder auch als Spritzgussteil aus Kunstsoff herzustellen.

### Bezugszeichenliste:

- 10: Vorrichtung
- 11: Gehäuse
- 12: Mittelachse von 11
- 13: Hinterer Bereich von 11
- 14: Vorderer Bereich von 11
- 15: Aufnahme
- 16: Bahn
- 17: Verjüngungswinkel
- 18: Durchmesser von 15
- 19: Außengewinde
- 20: Sperrelement
- 21: Seite von 20
- 22: Steigungswinkel
- 23: Struktur
- 30: Flansch

## Patentansprüche

1. Vorrichtung (10) zur Anbindung von elastischen Zugelementen für statische und dynamische Anwendungen,
mit einem eine Mittelachse (12) aufweisenden Gehäuse (11), welches eine Aufnahme (15) aufweist, in welches ein Ende des Zugelements aufnehmbar ist, wobei dann das Zugelement aus dem hinteren Bereich (13) des Gehäuses (11) heraus ragt,
wobei ein oder mehrere Sperrelemente (20) vorgesehen sind und das Ende des Zugelements unter Zwischenschaltung der Sperrelemente (20) in der Aufnahme (15) verklemmbar ist
und wobei für jedes der Sperrelemente (20) eine Bahn (16) vorgesehen ist, in der das jeweilige Sperrelement (20) verschieblich angeordnet ist,
**dadurch gekennzeichnet,**
**dass** jede der Bahnen (16) schräg zur Mittelachse (12) des Gehäuses (11) verläuft, wobei sich der Verlauf der Bahnen (16) in Richtung des hinteren Bereiches (13) des Gehäuses (11) verjüngt,
wobei bei einer Zugbelastung des im Gehäuse (11) befindlichen Zugelementes die Sperrelemente (20) auf den Bahnen (16) in Richtung des hinteren Bereiches (13) des Gehäuses (11) bewegbar sind und dort das Zugelement weiter verklemmen
und wobei die Sperrelemente (20) keilförmig ausgebildet sind und der Winkel der Steigung (Steigungswinkel 22) der Keilform dem Winkel der Verjüngung (Verjüngungswinkel 17) der Bahnen (16) entspricht.

2. Vorrichtung (10) nach Anspruch 1, **dadurch gekennzeichnet, dass** die Sperrelemente (20) auf ihrer dem Zugelement zugewandten Seite (21) eine Struktur (23) aufweisen wie ein Sägezahnmuster, ein Zackenmuster, eine Riffelung, ein Profil o.ä.

3. Vorrichtung (10) nach einem der Ansprüche 1 oder 2, **dadurch gekennzeichnet, dass** der Durchmesser (18) der Aufnahme (15) in dem hinteren Bereich (13) des Gehäuses (11) dem Durchmesser des Zugelementes im entspannten Zustand entspricht.

4. Vorrichtung (10) nach einem der Ansprüche 1 bis 3, **dadurch gekennzeichnet, dass** der Durchmesser (18) der Aufnahme (15) in dem vorderen Bereich (14) des Gehäuses (11) zwischen den Bahnen (16) dem Durchmesser des Zugelementes im entspannten Zustand entspricht.

5. Vorrichtung (10) nach einem der vorherigen Ansprüche, **dadurch gekennzeichnet, dass** das Gehäuse (11) an seinem vorderen Bereich (14) ein Außengewinde (19) aufweist.

6. Vorrichtung (10) nach Anspruch 5, **dadurch gekennzeichnet, dass** ein Haken und/oder eine Öse und/oder ein Flansch (30) welcher ein Innengewinde aufweist und/oder ein Blindstopfen welcher ein Innengewinde aufweist vorgesehen sind, welche mit dem Außengewinde (19) am Gehäuse (11) in Wirkverbindung bringbar sind und mittels welchem das Zugelement unter Zwischenschaltung der Vorrichtung (10) an einer weiteren Einrichtung festlegbar ist.
